**Europäisches Patentamt**

**European Patent Office**

**Office européen des brevets**

(19)

(11) Veröffentlichungsnummer : **0 362 315 B1**

(12) # EUROPÄISCHE PATENTSCHRIFT

(45) Veröffentlichungstag der Patentschrift :
**23.12.92 Patentblatt 92/52**

(51) Int. Cl.$^5$ : **H04B 14/04**

(21) Anmeldenummer : **89902498.8**

(22) Anmeldetag : **25.02.89**

(86) Internationale Anmeldenummer :
**PCT/DE89/00110**

(87) Internationale Veröffentlichungsnummer :
**WO 89/08357 08.09.89 Gazette 89/21**

(54) **EINRICHTUNG ZUR ÜBERPRÜFUNG VON SYSTEMEN ZUR VERARBEITUNG VON AUDIOSIGNALEN.**

(30) Priorität : **25.02.88 DE 3805946**

(43) Veröffentlichungstag der Anmeldung :
**11.04.90 Patentblatt 90/15**

(45) Bekanntmachung des Hinweises auf die
Patenterteilung :
**23.12.92 Patentblatt 92/52**

(84) Benannte Vertragsstaaten :
**AT BE CH DE FR GB IT LI LU NL SE**

(56) Entgegenhaltungen :
**IEEE Transactions on Instrumentation and
Measurement, vol. IM-31, Nr. 1, March 1982,
IEEE, (New York, US), P.J.J.A. Wolters:"Microprocessor-controlled signal-to-
noise ratio measurement system for speech
codes", pages 12-17**

(73) Patentinhaber :
**FRAUNHOFER-GESELLSCHAFT ZUR
FÖRDERUNG DER ANGEWANDTEN
FORSCHUNG E.V.
Leonrodstrasse 54
W-8000 München 19 (DE)**

(72) Erfinder : **SCHOTT, Hartmut
Harfenstr. 8b
W-8520 Erlangen (DE)**
Erfinder : **SEITZER, Dieter
Humboldtstr. 14
W-8520 Erlangen (DE)**
Erfinder : **GERHAUSER, Heinz
Saugendorf 17
W-8551 Waischenfeld (DE)**
Erfinder : **BRANDENBURG, Karlheinz
Am Europakanal 40
W-8520 Erlangen (DE)**
Erfinder : **EBERLEIN, Ernst
Hollerweg 5
W-8520 Erlangen (DE)**
Erfinder : **KRÄGELOH, Stefan
Steinforststr. 36
W-8520 Erlangen (DE)**
Erfinder : **KAPUST, Rolf
Schallerhoterstr. 46b
W-8520 Erlangen (DE)**
Erfinder : **POPP, Harald
Obermichelbacher Str. 18
W-8501 Tuchenbach (DE)**

(74) Vertreter : **Münich, Wilhelm, Dr. et al
Kanzlei Münich, Steinmann, Schiller
Wilhelm-Mayr-Str. 11
W-8000 München 21 (DE)**

EP 0 362 315 B1

## Beschreibung

### Technisches Gebiet

Die Erfindung bezieht sich auf eine Einrichtung zur Überprüfung von Systemen zur Verarbeitung von Audiosignalen.

Bei der Verarbeitung von Audiosignalen, beispielsweise bei der digitalen Codierung zur Datenreduktion, bei der Wiedergabe von aufgezeichneten Signalen, durch Lautsprecher etc. entstehen Fehler, d.h. das verarbeitete Audiosignal weicht vom ursprünglichen Audiosignal ab. Diese Abweichungen sind z.T. hörbar, z.T. werden sie aufgrund der Eigenschaften des menschlichen Hörempfindens nicht wahrgenommen.

Insbesondere bei neueren Verfahren zur Codierung von Audiosignalen macht man sich die Eigenschaften des menschlichen Hörempfindens zunutze: Es werden nur solche Signalanteile genau übertragen, die vom Ohr gut wahrgenommen werden. Das durch die "ungenauere" Übertragung entstehende "Fehler- bzw. Störsignal" wird dabei in seiner spektralen Zusammensetzung so beeinflußt, daß es nicht oder nur sehr schwer hörbar ist. Nur so sind die hohen Kompressionsgrade von 80% bis 90% erreichbar, die für eine digitale Übertragung von Audiosignalen beispielsweise über Digital-Rundfunksender bzw. für eine digitale Speicherung wünschenswert sind.

### Stand der Technik

Werden nun Musikstücke zur Datenreduktion digital codiert und anschließend wieder decodiert, so mißt man mit konventionellen Meßverfahren, wie S/N-Messungen (Messung des Signal/Rausch-bestandes) oder Klirrfaktormessungen erhebliche Stör- bzw. Fehleranteile, die aber in den meisten Fällen in der Praxis nicht hörbar sind.

Einfache Frequenzbewertungen, wie dB(A) berücksichtigen insbesondere Maskierungseffekte nicht. Auch eine Ermittlung des "Fehlersignals" durch aufwendige Frequenzbewertungen ohne Berücksichtigung der physiologischen Hörempfindlichkeit oder eine Bestimmung des THD-Faktors (Total harmonic distortion) liefern keinen aussagekräftigen Anhaltspunkt über die Qualität des Codieralgorithmus, so daß gerade Codieralgorithmen bislang nur durch ausführliche Hörtests beurteilt werden konnten.

### Darstellung der Erfindung

Der Erfindung liegt die Aufgabe zugrunde, eine Einrichtung zur Überprüfung von Systemen zur Verarbeitung von Audiosignalen anzugeben, die in Echtzeit eine quantitative Erfassung der Hörbarkeit von Störungen gestattet.

Eine erfindungsgemäße Lösung dieser Aufgabe ist mit ihren Weiterbildungen in den Patentansprüchen gekennzeichnet: Erfindungsgemäß weist die Einrichtung einen ersten Eingangsanschluß, an den das Eingangssignal des zu überprüfenden Systems zur Audiosignal-verarbeitung angelegt ist, einen zweiten Eingangsanschluß, an den das Ausgangssignal dieses Systems angelegt ist, und einen Signalprozessor auf. Der Signalprozessor ermittelt durch Korrelation der an den beiden Eingangsanschlüssen anstehenden Signale die Signalverzögerungszeit des zu überprüfenden Systems, so daß immer ein "Ausgangssignal" und das zugehörige durch das zu überprüfende System verarbeitete Audiosignal verglichen werden.

Gemäß der im Anspruch 1 angegebenen Ausführungsform bildet der Signalprozessor fortlaufend das Differenzsignal aus dem während eines bestimmten Zeitbereichs, beispielsweise ca 10 ms an dem ersten Eingangsanschluß anstehenden Signal und dem um die Signalverzögerungszeit später an dem zweiten Eingangsanschluß anstehendem Signal und ermittelt die spektrale Zusammensetzung des während des bestimmten Zeitbereichs an dem ersten Eingangsanschluß anstehenden Signals und des zugehörigen Differenzsignals.

Gemäß der im Anspruch 2 angegebenen Ausführungsform ermittelt der Signalprozessor die spektrale Zusammensetzung des während des bestimmten Zeitbereichs (wiederum beispielsweise ca 10 ms) an dem ersten Eingangsanschluß und des um die Signalverzögerungszeit später an dem zweiten Eingangsanschluß anstehenden Signals und bildet fortlaufend das Differenzsignal der spektralen Zusammensetzungen des während des bestimmten Zeitbereichs an dem ersten Eingangsanschluß und des um die Signalverzögerungszeit später an dem zweiten Eingangsanschluß anstehenden Signals.

Bei beiden Ausführungsformen ermittelt der Signalprozessor dann aus der spektralen Zusammensetzung des an dem ersten Eingangsanschluß anstehenden Signals die Mithörschwelle des menschlichen Ohres und vergleicht die ermittelte Mithörschwelle mit dem zugehörigen Differenzsigna!. Aufgrund des vergleichs ist dann eine entsprechende Bewertung der verarbeitung der Audiosignale möglich.

Zum verlauf der Mithörschwelle wird beispielsweise auf das Buch E.Zwicker, M.Zollner: Elektroakustik, Springer-Verlag Berlin-Heidelberg, 1984, 1987 verwiesen.

Im jedem Falle ermöglicht die erfindungsgemäße Einrichtung eine objektive und quantitative Erfassung von Veränderungen (Datenreduktion, Übertragungsfehler, Klangbeeinflussung etc) des Audiosignals durch das zu überprüfende System. Aufwendige subjektive Hörtests werden damit unterstützt oder gar erübrigt. Darüberhinaus liefert die erfindungsgemäße Einrichtung ein Maß für den Sicherheitsabstand von "Fehlern" von der Hörbarkeitsschwelle.

Die von der erfindungsgemäßen Einrichtung gelieferten objektiven Meßwerte für die Beeinflußung von Audiosignalen durch verarbeitungs- und/oder Übertragungssysteme können z.B. zum Vergleich verschiedener Übertragungskanäle oder zur quantitativen Erfassung von Verbesserungen/Verschlechterungen in der Entwicklung eingesetzt werden. Die Einrichtung kann aber auch zur Unterstützung subjektiver Hörtest herangezogen werden: Beispielweise können vorab kritische Musikpassagen ermittelt werden, die dann für einen Hörtest verwendet werden.

Die erfindungsgemäße Einrichtung benötigt keine speziellen Testsignale, wie z.B. Sinussignale. Es können vielmehr beliebige Musikstücke als Testsignale verwendet werden, so daß ein Audiokanal bzw. ein System zur Verarbeitung von Audiosignalen in seiner "normalen Verwendung" getestet wird.

Weiterbildungen der Erfindung sind in den Unteransprüchen angegeben:

Gemäß Anspruch 3 werden "Signalenergien" zur Ermittlung der Mithörschwelle bewertet. Hierzu ermittelt der Signalprozessor durch Quadrieren der sich in bestimmten Frequenzbereichen ergebenden Amplitude des am ersten Eingangsanschluß anstehenden Signals die jeweilige Signalenergie und berechnet aus der Signalenergie die Maskierungshörschwelle.

Erfindungsgemäß werden zur Berücksichtigung des physiologischen Hörempfindens gerade Maskierungseffekte berücksichtigt: Darunter wird verstanden, daß Störsignale, deren Fegel größer als die sog. Ruhestörschwelle ist, durch dominante Signalanteil verdeckt bzw. maskiert werden können, so daß für die Hörbarkeit von Störungen nicht nur deren absoluter Pegel im Vergleich zur Grund-bzw. Ruhehörschwelle, sondern auch ihre relative Frequenzlage zu dominanten Signalanteilen entscheidend ist.

Deshalb legt gemäß Anspruch 4 der Signalprozessor die Maskierungshörschwelle als Mithörschwelle fest, wenn die Grundhörschwelle (Ruhehörschwelle) in dem jeweiligen Frequenzbereich kleiner als die Maskierungshörschwelle ist.

Entsprechend legt nach Anspruch 5 der Signalprozessor die Grundhörschwelle als Mithörschwelle fest, wenn die Grundhörschwelle in dem jeweiligen Frequenzbereich größer als die Maskierungshörschwelle ist.

Zur Objektivierung der gemessenen Werte bildet der Signalprozessor für jeden Frequenzbereich den NMR-Wert (Noise-to Mask-Ratio), der gegeben ist durch

$$NMR = \log (F_E / M_E)$$

wobei $F_E$ die Energie des Fehlersignals in diesem Frequenzbereich und $M_E$ die Energie der Mithörschwelle in diesem Frequenzbereich sind (Anspruch 6). Der NMR-Wert stellt eine Maßgröße für die Hörbarkeit der einzelnen Störungen in dem jeweiligen Frequenzbereich dar. Negative Werte sind ein Maß für den "Sicherheitsabstand" der Störung zur Hörbarkeitsgrenze.

Da die erfindungsgemäße Einrichtung eine Echtzeit-Überprüfung eines System zur Audiosignalverarbeitung erlaubt, ist es bevorzugt, wenn die Einrichtung gemäß Anspruch 7 eine Anzeigeeinheit aufweist, die den Momentanwert des NMR-Werts für jeden Frequenzbereich anzeigt. Eine derartige Anzeigeeinheit, die beispielsweise die Größen in dem jeweiligen Frequenzbereich in Form von gegebenenfalls auch farbigen Balken anzeigen kann, gestattet die laufende visuelle Kontrolle der Audiosignalverarbeitung. Selbstverständlich ist es aber auch möglich, daß die berechneten Werte, die ein Maß für die Störgrößen aufgrund der Audiosignalverarbeitung sind, lediglich beispielsweise an eine nachgeordnete Verarbeitungseinheit ausgegeben werden.

Zusätzlich zur Berechnung, Ausgabe und/oder Anzeige der Momentanwerte für jeden Frequenzbereich kann der Signalprozessor die für jeden Frequenzbereich ermittelten NMR-Werte auch über mehrere Zeitbereiche und/oder Frequenzbereiche mitteln (Anspruch 8):

Insbesondere der Mittelwert über sämtliche Frequenzbereiche ist dabei von Bedeutung, da er ein Maß für die "Lautheit" der Störung darstellt.

Ferner ist es beispielsweise für die Bewertung eines Datenreduktions-Algorithmus für Bedeutung, wie oft hörbare Störungen auftreten (Masking Flag). Deshalb erfaßt gemäß Anspruch 9 der Signalprozessor erfindungsgemäß, wie oft das Fehlersignal die Mithörschwelle in einem bestimmten Frequenzbereich überschreitet.

Weiterhin ist es gemäß Anspruch 10 in manchen Anwendungsfällen von Vorteil, wenn der Signalprozessor zusätzlich den Signal/Rausch-bestand ermittelt. Auch kann es unter Umständen nützlich sein, wenn die erfindungsgemäße Einrichtung beispielsweise das Frequenzspektrum des ursprünglichen Signals zusätzlich zum Spektrum des Fehlersignals darstellt, da dies der Bedienungsperson zusätzliche Hinweise auf die Ursache der Störung gibt.

Bevorzugt werden die einzelnen ermittelten Werte in einem Speicher zyklisch gespeichert, so daß beispielsweise durch einen Eingriff der Bedienungsperson das Überschreiben der gespeicherten Werte durch die neuesten Werte gestoppt werden kann und die gespeicherten Werte erhalten bleiben (Anspruch 11). Es ist selbstverständlich aber auch möglich, sämtliche Werte nichtflüchtig aufzuzeichnen und nachträglich mit höherer Auflösung zu analysieren.

Die erfindungsgemäße Einrichtung eignet sich zur Überprüfung beliebiger Systeme zur verarbeitung von Audiosignalen und kann beispielsweise zur Bewertung von Datenreduktions-Algorithmen, zur Ermittlung der hörbaren Störungen aufgrund von Übertragungsfehlern, zur Beurteilung der Verzerrung in Audiokanälen, wie Lautsprechern oder Verstärkern eingesetzt werden.

Dabei ist es besonders bevorzugt, wenn der Signalprozessor die Daten digital verarbeitet (Anspruch 12). Zur Umwandlung von gegebenenfalls analog anstehenden Signalen sind dann den Eingangsanschlüssen Analog/Digitalwandler vorgeschaltet.

Der digitale Signalprozessor wandelt dabei bevorzugt das "Zeitsignal" mittels der diskreten Fouriertransformation (DFT oder FFT) in das "Spektralsignal" um.

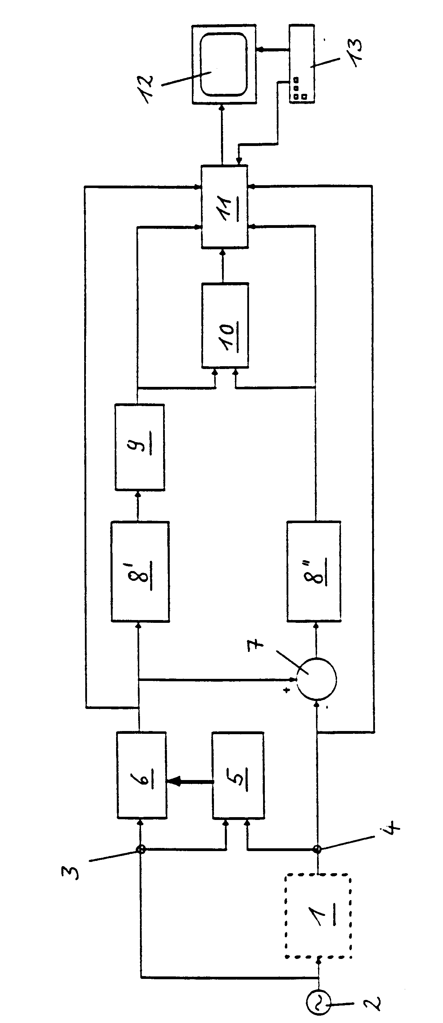

## Kurze Beschreibung der Zeichnung

Die Erfindung wird nachstehend anhand eines Ausführungsbeispiels unter Bezugnahme auf die Zeichnung näher beschrieben, deren

einzige Figur ein Blockschaltbild (Funktionsschaltbild) einer erfindungsgemäßen Einrichtung zeigt.

## Beschreibung eines Ausführungsbeispiels

Die einzige Figur zeigt ein Block- bzw. Funktionsschaltbild einer erfindungsgemäße Einrichtung zur Überprüfung eines Systems 1 zur Verarbeitung von Audiosignalen, beispielsweise eines Systems zur Datenreduktion des Signals einer Signalquelle 2, beispielsweise eines CD-Abspielgeräts.

Die Einrichtung weist zwei Eingangsanschlüsse 3 und 4 auf. An den Eingangsanschluß 3 ist das Eingangssignal des zu überprüfenden Systems 1, also das Ausgangssignal der Signalquelle 2 angelegt. An den Eingangsanschluß 4 ist das Ausgangssignal des Systems 1 angelegt. Im Falle eines Systems zur Datenreduktion handelt es sich bei dem an den Anschluß 4 angelegten Signal um das zunächst von dem System 1 codierte und dann wieder decodierte Signal.

Die Eingangsanschlüsse 3 und 4 der Einrichtung sind mit einem Signalprozessor verbunden, der bei dem gezeigten Ausführungsbeispiel ein digitaler Signalprozessor ist, und dessen Funktion - nicht unbedingt dessen Aufbau - durch die einzelnen Blöcke in der Figur veranschaulicht ist.

Durch Korrelation der an den beiden Eingangsanschlüssen 3 und 4 anstehenden Signale in einem Korrelator 5 wird die Laufzeit bzw. die Signalverzögerung des Systems 1 zur verarbeitung bzw. Übertragung von Audiosignalen bestimmt. Der Korrelator 5 beaufschlagt entsprechend der ermittelten Verzögerung ein Laufzeitglied 6, das das an dem Eingangsanschluß 3 anstehende - nicht durch das System 1 verarbeitete Audiosignal um die Signalverzögerungszeitspanne im System 1 verzögert, so daß in den nachfolgenden Verarbeitungsschritten immer "zusammengehörende" Signale an den Anschlüssen 3 und 4 verglichen werden.

Von dem verzögerten, am Eingangsanschluß 3 anstehenden Signal wird das am Eingangsanschluß 4 anstehende Signal in einem Substrahierer 7 subtrahiert. Das Differenzsignal, d.h. das Ausgangssignal des Subtrahierers 7 und das am Anschluß 3 anstehende Signal werden anschließend in den Transformations-Stufen 8' bzw. 8" Fourier-transformiert. Aus dem Fourier-transfor-mierten Signal 3 wird im Rechenwerk 9 die sich unter physiologischen Gesichtspunkten ergebende Mithörschwelle berechnet.

Anschließend erfolgt im Block 10 für jeden Frequenzbereich die Berechnung des NMR-Werts (Noise-to-Mask-Ratio), der gegeben ist durch

$$NMR = \log (F_E / M_E)$$

wobei

$F_E$      die Energie des Fehlersignals in diesem Frequenzbereich

$M_E$      die Energie der Mithörschwelle in diesem Frequenzbereich sind.

Der NMR-Wert stellt eine Maßgröße für die Hörbarkeit der einzelnen Störungen in dem jeweiligen Frequenzbereich dar. Negative Werte sind ein Maß für den "Sicherheitsabstand" der Störung zur Hörbarkeitsgrenze.

Der NMR-Wert sowie die Fourier-Spektren des ursprünglichen Signals 3 und des Differenzsignals und die ursprünglichen "Zeitsignale", die an den Anschlüssen 3 und 4 anstehen, werden in einem Speicher 11 gespeichert sowie auf einer Anzeigeeinheit 12 angezeigt. Dies ist durch entsprechende "Leitungsverbindungen" in der Figur symbolisiert.

Ferner ist eine Tastatur 13 vorgesehen, die zur Steuerung und Bedienung der Funktionen des Signalprozessors dient.

Im folgenden soll die Funktionsweise der erfindungsgemäßen Einrichtung erläutert werden:

Die Gesamtfunktion kann in vier Teilfunktionen aufgeteilt werden:
- Bestimmung des Fehlersignals,
- Berechnung der Spektren des Orignal- und des Fehlersignals,
- Berechnung der Mithörschwellen und des NMR-Werts,
- Anzeige, Weiterverarbeitung und/oder Speicherung der Ergebnisse.

Bei dem vorstehend beschriebenen Ausfürungsbeispiel wird als Fehlersignal die Differenz zwischen den Abtastwerten des Orginal- und des codierten/decodierten Signals genommen. Hierzu sind die betastwerte beider Signale - gegebenenfalls nach Analog/Digital-Wandlung - an die Eingangsanschlüsse 3 und 4 angelegt. Um die Differenz zwischen zusammengehörigen betastwerten zu bilden, wird zunächst die Verzögerung des untersuchten Systems 1 mittels des Korrelators 5 ermittelt und entsprechend der ermittelten Verzögerung des Orginalsignal in der Verzögerungsstrecke 6 verzögert. In dieser Teilfunktion können auch triviale Veränderungen des Signals (Invertierung, Verstärkung etc) vorgenommen werden.

Anschließend werden die Kurzzeitspektren des Orginal- und des Differenzsignals bestimmt. Dazu wird beispielsweise eine schnelle Fouriertransformation (FFT) mit der Länge 1024 verwendet. Die Analyse erfolgt bei dem gezeigten Ausführungsbeispiel mit einer Überlappung von 100%, d.h. es wird alle 512 Abtastwerte die FFT von 512 vorhergehenden und 512 neuen Punkten bestimmt. Zur Verbesserung der Analyseeigenschaften der FFT kann ein Hanningfenster verwendet werden; dies bedeutet, daß alle 11,6 ms (Abtastfrequenz 44,1 kHz) ein neues Spektrum anfällt.

Zur Vorbereitung der Rechenschritte im dritten Teil wird noch das logarithmierte Amplitudenspektrum berechnet. Dieses kann auch angezeigt werden, so daß die erfindungsgemäße Einrichtung auch zur Echtzeitspektralanalyse eingesetzt werden kann.

Im Anschluß hieran erfolgt die eigentliche physioakustische Bewertung. Dort werden die Mithörschwellen bestimmt und anschließend das "Noise-to-Mask-Ratio" (NMR) nach den obigen Gleichungen berechnet. Zur Bestimmung der Mithörschwellen kann beispielsweise wie folgt vorgegangen werden:

Das transformierte Spektrum wird in Frequenzgruppen zusammengefaßt, indem mehrere Linien der zunächst linearen Frequenzachse in einer der Bark-Skala ähnlichen Einteilung aufaddiert und durch die Anzahl der addierten Linien dividiert werden. Beispielsweise werden bei dem gezeigten Ausführungsbeispiel 27 Frequenzgruppen gebildet. Ausgehend von diesem Grobverlauf der spektralen Zusammensetzung werden die Mithörschwellen berechnet:

Im ersten Durchgang wird die Verdeckung in der eigenen Frequenzgruppe berechnet. Die Berechnung der Verdeckung zu benachbarten Gruppen erfolgt mit Hilfe von - beispielsweise empirisch ermittelten - Tabellen, in der die Höhe der Verdeckung für die benachbarten Frequenzbänder abgelegt ist. Die errechnete Mithörschwelle wird anschließend mit der Ruhehörschwelle verglichen. Ist die Verdeckung geringer als die Ruhehörschwelle, wird diese als Mithörschwelle angenommen.

Da die Ruhehörschwelle direkt mit der Abhörlautstärke gekoppelt ist, wird bei dem beschriebenen Ausführungsbeispiel das kleinste mit der Quantisierung von 16 Bit noch darstellbare Signal als Ruhehörschwelle definiert, d.h. die Ruhehörschwelle ist geeicht, wenn die Abhörschwelle so eingestellt ist, daß diese Signale gerade hörbar sind.

Hieraus ergibt sich ein durch eine Treppenfunktion angenäherter Verlauf der momentanen Mithörschwelle. Diese wird nun auf das Fehlersignal angewandt. Dazu wird das Fehlersignal ebenfalls in den Frequenzbereich transformiert und in die gleichen Frequenzgruppen eingeteilt.

Der Energieinhalt in jedem Frequenzband wird zu der errechneten Hörschwelle ins Verhältnis gesetzt, und dazu der oben angegebene NMR-Wert für die einzelnen Frequenzbänder berechnet. Als logarithmisches Maß gibt der NMR-Wert den Abstand des Stör- bzw. Fehlersignals zur Hörschwelle in diesem Band an. Wird in einem Band die sog. Maskierungsbedingung verletzt, d.h. ist das Fehlersignal stärker als die Hörschwelle in diesem Band, wird ein sog. "Masking-Flag" gesetzt, das angibt, daß in diesem Band eine Störung hörbar ist.

Der gemittelte bestand der Störung von der Maskierungsschwelle und die Anzahl der Masking-Flag-Anschläge pro Zeiteinheit geben einen wichtigen Hinweise auf die Qualität der verarbeitung der Audiosignale, beispielsweise also auf die Qualität der Codierung.

Die momentanen NMR-Werte und die zugehörigen Spektren werden auf der Anzeigeeinheit 13, beispielsweise einem Bildschirm in Form von Balkendiagrammen angezeigt, so daß die Anzeige während des Abhörens der Musik beobachtet werden kann.

Mittels der Tastatur 13 kann die Anzeige angehalten werden, so daß die letzten 5 - 10 Sekunden (je nach Auflösung der Anzeige) genau analysiert werden können.

Zusätzlich können auch die Mittelwerte des NMR-Werts in den einzelnen Frequenzgruppen, über die einzelnen Frequenzgruppen, den Signal-Rausch-Abstand (SNR), den SNR-Wert in den einzelnen Frequenzgruppen, die besten und schlechtesten Werte innerhalb eines einstellbaren Zeitraums und die relative Häufigkeit der Masking-Flag-Anschläge berechnet werden.

Vorstehend ist die Erfindung anhand eines Ausführungsbeispiels ohne Beschränkung des allgemeinen Erfindungsgedankens beschrieben worden, innerhalb dessen selbstverständlich die verschiedensten Modifikationen möglich sind:

Beispielsweise können die Transformation in den "Spektralbereich" und die Differenzbildung zwischen den beiden an den Eingangsanschlüssen 3 und 4 anstehenden Signalen auch vertauscht werden: So ist es möglich, zunächst die an den Eingangsanschlüssen 3 und 4 anstehenden Signale in den "Frequenzraum" zu transformieren, und anschließend das Differenz zwischen den beiden Signalen zu bilden.

Als Transformationsfunktion können auch andere Funktionen, beispielsweise die diskrete Fouriertransformation (DFT) verwendet werden.

Ausdrücklich wird noch auf folgendes hingewiesen: In der Figur sind zur Erleichterung des Verständnisses die einzelnen Verarbeitungsschritte als "Funktionsblöcke" dargestellt. Dies bedeutet nicht, daß der Signalprozessor derartige "Blöcke" als diskrete Bausteine aufweisen muß. Vielmehr ist es selbstverständlich möglich, einen - oder zur Erhöhung der Verarbeitungsgeschwindigkeit mehrere - frei programmierbare Signalprozessoren zu verwenden, die beispielsweise das Laufzeitglied durch Zwischenspeicherung der einzelnen digitalen Werte realisieren.

## Patentansprüche

1. Einrichtung zur Überprüfung von Systemen zur Verarbeitung von Audiosignalen, mit folgenden Merkmalen:
   - die Einrichtung weist einen ersten Eingangsanschluß (3), an den das Eingangssignal (1) des zu überprüfenden Systems (2) zur Audiosignal-Verarbeitung angelegt ist. einen zweiten Eingangsanschluß (4), an den das Ausgangssignal des Systems angelegt ist, und einen Signalprozessor auf,
   - der Signalprozessor ermittelt durch Korrelation (5) der an den beiden Eingangsanschlüssen (3,4) anstehenden Signale die Signalverzögerungszeit des zu überprüfenden Systems,
   - der Signalprozessor bildet fortlaufend das Differenzsignal (7) aus dem während eines bestimmten Zeitbereichs an dem ersten Eingangsanschluß (3) anstehenden Signal und dem um die Signalverzögerungszeit (6) später an dem zweiten Eingangs-anschluß (4) anstehendem Signal,
   - der Signalprozessor ermittelt die spektrale Zusammensetzung (8′.8″) des während des bestimmten Zeitbereichs an dem ersten Eingangsanschluß (3) anstehenden Signals und des zugehörigen Differenzsignals (7).
   - aus der spektralen Zusammensetzung des an dem ersten Eingangsanschluß anstehenden Signals ermittelt der Signalprozessor die Mithörschwelle (9) des menschlichen Ohres und vergleicht die ermittelte Mithörschwelle mit dem zugehörigen Differenzsignal.

2. Einrichtung zur Überprüfung von Systemen zur Verarbeitung von Audiosignalen, mit folgenden Merkmalen:
   - die Einrichtung weist einen ersten Eingangsanschluß (3), an den das Eingangssignal (1) des zu überprüfenden Systems (2) zur Audiosignal-Verarbeitung angelegt ist, einen zweiten Eingangsanschluß (4), an den das Ausgangssignal des Systems (1) angelegt ist, und einen Signalprozessor auf,
   - der Signalprozessor ermittelt durch Korrelation (5) der an den beiden Eingangsanschlüssen anstehenden Signale die Signalverzögerungszeit des zu überprüfenden Systems,
   - der Signalprozessor ermittelt die spektrale Zusammensetzung (8′,8″) des während des bestimmten Zeitbereichs an dem ersten Eingangsanschluß und des um die Signalverzögerungszeit (6) später an dem zweiten Eingangsanschluß anstehenden Signals,
   - der Signalprozessor bildet fortlaufend das Differenzsignal der spektralen Zusammensetzungen des während des bestimmten Zeitbereichs an dem ersten Eingangsanschluß und des um die Signalverzögerungszeit später an dem zweiten Eingangsanschluß anstehenden Signals.
   - aus der spektralen Zusammensetzung des an dem ersten Eingangsanschluß anstehenden Signals ermittelt der Signalprozessor die Mithörschwelle des menschlichen Ohres und vergleicht die ermittelte Mithörschwelle mit dem zugehörigen Differenzsignal.

3. Einrichtung nach Anspruch 1 oder 2, dadurch **gekennzeichnet**, daß zur Ermittlung der Mithörschwelle der Signalprozessor durch Quadrieren der sich in bestimmten Frequenzbereichen ergebenden Amplitude des am ersten Eingangsanschluß anstehenden Signals die jeweilige Signalenergie ermittelt, und aus der Signalenergie die Maskierungshörschwelle ermittelt.

4. Einrichtung nach Anspruch 3, dadurch **gekennzeichnet**, daß der Signalprozessor die Maskierungshörschwelle als Mithörschwelle festlegt, wenn die Grundhörschwelle in dem jeweiligen Frequenzbereich kleiner als die Maskierungshörschwelle ist.

5. Einrichtung nach Anspruch 3, dadurch **gekennzeichnet**, daß der Signalprozessor die Grundhörschwelle als Mithörschwelle festlegt. wenn die Grundhörschwelle in dem jeweiligen Frequenzbereich größer als die Maskierungshörschwelle ist.

6. Einrichtung nach einem der Ansprüche 1 bis 5, dadurch **gekennzeichnet**, daß der Signalprozessor für jeden Frequenzbereich den Wert NMR bildet. der gegeben ist durch

$$NMR = \log (F_E / M_E)$$

wobei

$F_E$     die Energie des Fehlersignals in diesem Frequenzbereich

$M_E$     die Energie der Mithörschwelle in diesem Frequenzbereich sind.

7. Einrichtung nach Anspruch 6, dadurch **gekennzeichnet**, daß die Einrichtung eine Anzeigeeinheit aufweist, die Momentanwert von NMR für jeden Frequenzbereich anzeigt.

8. Einrichtung nach einem der Ansprüche 1 bis 7, dadurch **gekennzeichnet**, daß der Signalprozessor die für jeden Frequenzbereich ermittelten NMR-Werte über mehrere Zeitbereiche und/oder Frequenzbereiche mittelt.

9. Einrichtung nach einem der Ansprüche 1 bis 8,

dadurch **gekennzeichnet,** daß der Signalprozessor erfaßt, wie oft das Fehlersignal die Mithörschwelle in einem bestimmten Frequenzbereich überschreitet.

10. Einrichtung nach einem der Ansprüche 1 bis 9, dadurch **gekennzeichnet,** daß der Signalprozessor zusätzlich den Signal/Rausch-Abstand ermittelt.

11. Einrichtung nach einem der Ansprüche 1 bis 10, dadurch **gekennzeichnet,** daß die einzelnen ermittelten Werte in einem Speicher zyklisch speicherbar sind.

12. Einrichtung nach einem der Ansprüche 1 bis 11, dadurch **gekennzeichnet,** daß die Signalverarbeitung digital erfolgt, und daß zur Umwandlung von gegebenenfalls analog anstehenden Signalen den Eingangsanschlüssen Analog/Digitalwandler vorschaltbar sind.

## Claims

1. Device for monitoring audio signal processing systems, presenting the following features:
   - the device comprises a first input terminal (3) which the input signal (1) of the audio signal processing system (2) under check is applied to, a second input terminal (4) which the output signal of the system is applied to, and a signal processor,
   - the signal processor correlates (5) the signals applied to the two input terminals (3, 4) to calculate the signal delay time of the system to be checked,
   - the signal processor continuously generates the differential signal (7) from the signal applied to said first input terminal (3) during a defined time range and from the signal applied to said second input terminal with a delay corresponding to the signal delay time (6),
   - the signal processor determines the spectral composition (8′, 8″) of the signal applied on said first input terminal (3) during the defined time range and the appertaining differential signal (7),
   - the signal processor determines the monitoring threshold (9) of the human ear from the spectral composition of the signal applied on said first input terminal, and compares the monitoring threshold so determined against the appertaining differential signal.

2. Device for checking audio signal processing systems, presenting the following features:
   - the device comprises a first input terminal (3) which the input signal (1) of the audio signal processing system (2) under check is applied to, a second input terminal (4) which the output signal of the system is applied to, and a signal processor,
   - the signal processor correlates (5) the signals applied to the two input terminals (3, 4) to calculate the signal delay time of the system to be checked,
   - the signal processor determines the spectral composition (8′, 8″) of the signal applied to said first input terminal (3) during a defined time range and of the signal applied to said second input terminal with a delay corresponding to the signal delay time (6),
   - the signal processor continuously generates the differential signal of the spectral compositions of the signal applied to said first input terminal during a defined time range and of the signal applied to said second input terminal with a delay corresponding to the signal delay time,
   - the signal processor determines the monitoring threshold (9) of the human ear from the spectral composition of the signal applied on said first input terminal, and compares the monitoring threshold so determined against the appertaining differential signal.

3. Device according to Claim 1 or 2, **characterized** in that for determination of the monitoring threshold said signal processor squares the amplitude of the signal applied on said first input terminal, which occurs in certain frequency ranges, so as to determine the respective signal energy level, and derives the masking audibility threshold from this signal energy level.

4. Device according to Claim 2, **characterized** in that said signal processor defines the masking audibility threshold as monitoring threshold if the basic audibility threshold in the respective frequency range is lower than the masking audibility threshold.

5. Device according to Claim 3, **characterized** in that said signal processor defines said basic audibility threshold as monitoring threshold if the basic audibility threshold in the respective frequency range is higher than the masking audibility threshold.

6. Device according to any of Claims 1 to 5, **characterized** in that said signal processor generates the NMR value for each frequency range, which value is defined by the relationship

$$NMR = \log (F_E / M_E)$$

wherein

$F_E$ =    the energy level of the fault signal in this frequency range,

$M_E$ =    the energy level of the monitoring threshold in this frequency range

7.   Device according to Claim 6, **characterized** in that the device comprises a display to indicate the instantaneous NMR value for each frequency range.

8.   Device according to any of Claims 1 to 7, **characterized** in that signal processor averages the NMR values determined for each frequency range over several time ranges and/or frequency ranges.

9.   Device according to any of Claims 1 to 8, **characterized** in that said signal processor detects how often the fault signal exceeds the monitoring threshold in a certain frequency range.

10.  Device according to any of Claims 1 to 9, **characterized** in that said signal processor additionally determines the signal-to-noise ratio.

11.  Device according to any of Claims 1 to 10, **characterized** in that the individual values determined may be cyclically stored in a memory.

12.  Device according any of Claims 1 to 11, **characterized** in that the signals are processed in a digital form, and that A/D converters may be connected in series for converting signals possibly applied in an analog form.

**Revendications**

1.   Dispositif pour le contrôle de systèmes de traitement d'audio-signaux, qui présent les caractéristiques suivantes:

- le dispositif comprend une première borne d'entrée (3) à laquelle s'applique le signal d'entrée du système de traitement d'audio-signaux (2) sous contrôle, une deuxième borne d'entrée (4) à laquelle s'applique le signal de sortie du système, et un processeur de signaux,

- le processeur de signaux fait une correlation (5) entre les signaux appliqués auxdites deux bornes d'entrée (3, 4) pour une calculation du temps de de propagation de signal du système sous contrôle,

- le processeur de signaux produit en continu le signal différentiel (7) du signal appliqué à ladite première borne d'entrée (3) pendant une gamme de temps définie et du signal appliqué à la deuxième borne d'entrée, qui est retardé par le temps de propagation du signal (6),

- le processeur de signaux établit la composition spectrale (8', 8'') du signal appliqué à la première borne d'entrée (3) pendant la gamme de temps définie et du signal différentiel y corrélé (7),

- le processeur de signaux établit le seuil d'écoute qui est perceptible à l'oreille humaine, en le dérivant de la composition spectrale du signal appliqué à la première borne d'entrée, et en comparant le seuil d'écoute si établi avec le signal différentiel y corrélé.

2.   Dispositif pour le contrôle de systèmes de traitement d'audio-signaux, qui présent les caractéristiques suivantes:

- le dispositif comprend une première borne d'entrée (3) à laquelle s'applique le signal d'entrée du système de traitement d'audio-signaux (2) sous contrôle, une deuxième borne d'entrée (4) à laquelle s'applique le signal de sortie du système, et un processeur de signaux,

- le processeur de signaux fait une correlation (5) entre les signaux appliqués auxdites deux bornes d'entrée (3, 4) pour une calculation du temps de propagation de signal du système sous contrôle,

- le processeur de signaux établit la composition spectrale (8', 8'') du signal appliqué à la première borne d'entrée (3) pendant la gamme de temps définie et du signal appliqué à ladite deuxième borne d'entrée, qui est retardé par le temps de propagation du signal (6),

- le processeur de signaux produit en continu le signal différentiel (7) de la composition spectrale du signal appliqué à ladite première borne d'entrée (3) pendant une gamme de temps définie et du signal appliqué à la deuxième borne d'entrée, qui est retardé par le temps de propagation du signal (6),

- le processeur de signal établit le seuil d'écoute (9) perceptible à l'oreille humaine, en le dérivant de la composition spectrale du signal appliqué à ladite première borne d'entrée, et en comparant le seuil d'écoute ainsi établi avec le signal différentiel y afféré.

3.   Dispositif selon la revendication 1 ou 2, **caractérisé** en ce que pour l'établissement du seuil d'écoute, le processeur de signaux forme le carré de l'amplitude du signal appliqué à ladite première borne d'entrée, qui apparait dans certaines gammes des fréquences, afin de déterminer le niveau d'énergie du signal respectif, et dérivé le seuil d'audibilité de masquage de ce niveau d'énergie de signal.

4. Dispositif selon la revendication 2, **caractérisé** en ce que ledit processeur de signaux définit le seuil d'audibilité de masquage comme seuil d'écoute quand le seuil d'audibilité de base dans la gamme des fréquences respective, est plus bas que le seuil d'audibilité de masquage.

5. Dispositif selon la revendication 3, **caractérisé** en ce que ledit processeur de signaux définit ledit seuil d'audibilité de base comme seuil d'écoute quand le seuil d'audibilité de base dans la gamme des fréquences respective, est plus haut que le seuil d'audibilité de masquage.

6. Dispositif selon une quelconque des revendications 1 à 5, **caractérisé** en ce que ledit processeur de signaux détermine la valeur NMR pour chaque gamme des fréquences, laquelle valeur se définit par la relation

$$NMR = \log (F_E / M_E)$$

dans laquelle:

$F_E$ = dans cette gamme des fréquences, niveau d'énergie du signal de défaut

$M_E$ = le niveau d'énergie du seuil d'écoute dans cette gamme des fréquences.

7. Dispositif selon la revendication 6, **caractérisé** en ce que le dispositif comprend une unité d'affichage pour indiquer la valeur NMR instantanée pour chaque gamme des fréquences.

8. Dispositif selon une quelconque des revendications 1 à 7, **caractérisé** en ce que ledit processeur de signaux fait la moyenne des valeurs NMR établies pour chaque gamme des fréquences sur une pluralité des gammes de temps et/ou des fréquences.

9. Dispositif selon une quelconque des revendications 1 à 8, **caractérisé** en ce que ledit processeur de signaux détecte le fréquence de dépassements du seuil d'écoute par le signal de défaut dans une certaine gamme de fréquences.

10. Dispositif selon une quelconque des revendications 1 à 9, **caractérisé** en ce que ledit processeur de signaux établit de même the rapport signal/bruit.

11. Dispositif selon une quelconque des revendications 1 à 10, **caractérisé** en ce qu'on peut mémoriser les valeurs individuelles établies d'une manière cyclique dans une mémoire.

12. Dispositif selon une quelconque des revendications 1 à 11, **caractérisé** en ce que les signaux sont traités en forme numérique, et en ce qu'on peut relier des convertisseurs A/D en série pour convertir des signaux éventuellement appliqués en forme analogique.